# EUROPÄISCHE PATENTANMELDUNG

(11) **EP 1 085 311 A2**
(43) Veröffentlichungstag der Anmeldung: **21.03.2001**
(21) Anmeldenummer: 00117268.3
(22) Anmeldetag: 16.08.2000
(51) Int. Cl.: G01M 15/00

(54) **Auswertungsverfahren zur Bestimmung des Schädigungsgrades einer Maschine oder Maschinenkomponente**

(30) Priorität: 16.09.1999 DE 19944435
(71) Anmelder: Volkswagen Aktiengesellschaft, 38436 Wolfsburg (DE)
(72) Erfinder: Urban, Peter, 38440 Wolfsburg (DE)

(57) **Zusammenfassung**

Die Erfindung betrifft ein Auswerteverfahren zur Bestimmung eines Schädigungsgrades einer Maschine oder Maschinenkomponente, insbesondere eines Zahnriemens einer Brennkraftmaschine, mit einem daran angeschlossenen Betriebsdatenerfassungssystem bei dem während eines Maschinenbetriebes über Sensoren unterschiedliche Betriebsparameter aufgenommen werden, die mit Hilfe von Übertragungsfunktionen in aktuelle Belastungen umgerechnet und über die Lebensdauer der Maschine oder Maschinenkomponente aufsummiert werden und die Summe mit einer in empirischen Versuchen ermittelten Ausfallfunktionen verglichen und daraus ein Schädigungsgrad errechnet wird.

## Beschreibung

Die Erfindung betrifft ein Auswerteverfahren zur Bestimmung des Schädigungsgrades einer Maschine oder einer Maschinenkomponente mit einem daran angeschlossenen Betriebsdatenerfassungssystem.

Es ist ein Verfahren zur Berechnung und Anzeige von Serviceintervallen von Verschleiß und/oder Alterungsprozessen unterworfenen Komponenten bekannt, DE 197 09 445 A 1, bei dem die ermittelten Betriebsparameter gewichtet oder ungewichtet aufsummiert und mit einem vorgegebenen Schwellwert verglichen werden, dessen Überschreitung das Ende eines Service-Intervalles andeutet.

Nachteilig an diesem vorbekannten Verfahren ist insbesondere, daß es durch seinen festgelegten Schwellwert die tatsächlichen Betriebsbelastungen einer Maschine oder Maschinenkomponente nur sehr ungenau in einen exakten Schädigungsgrad eines Bauteils umsetzen kann.

Aufgabe der Erfindung ist es deshalb, ein Auswerteverfahren zur Verfügung zu stellen, bei dem der Schädigungsgrad einer Maschine oder einer Maschinenkomponente exakt vorherbestimmbar ist.

Die Lösung dieser Aufgabe wird in Verbindung mit den Oberbegriffsmerkmalen erfindungsgemäß durch die im kennzeichnenden Teil des Hauptanspruches angegebene technische Lehre vermittelt.
Während des Betriebes einer Maschine werden über bereits vorhandene oder zusätzlich anzuordnende Sensoren Betriebsparameter aufgenommen, die bei einem Kraftfahrzeug mit Brennkraftmaschine beispielsweise deren Motordrehzahl, die Fahrgeschwindigkeit des Kraftfahrzeuges, die Einspritzmenge sowie die Bauteil- und Umgebungstemperatur betreffen können. Über Übertragungsfunktionen eines angeschlossenen Betriebsdatenerfassungssystemes werden diese Betriebsparameter in aktuelle Belastungen umgerechnet, wobei diese Belastungen über die Lebensdauer der Maschine oder der Maschinenkomponente aufsummiert werden und die Summe mit in empirischen Versuchen ermittelten Ausfallfunktionen verglichen wird, woraus sich ein momentaner Schädigungsgrad der Maschine oder Maschinenkomponente errechnen läßt.

Besonders vorteilhaft an diesem erfinderischen Auswerteverfahren ist, daß die Belastungen, sei es durch die entstehenden Kräfte, die Temperatur, die Drehzahlen, die Zeit oder die beanspruchte Leistung einzeln oder in Kombination verschiedener Belastungen in eine Schädigungsgröße umgerechnet werden können, so daß sich dieses Auswerteverfahren individuell bei den verschiedensten Maschinen oder Maschinenkomponenten anwenden läßt.

Besonders vorteilhaft ist die Benutzung des erfindungsgemäßen Auswerteverfahrens dabei bei der Bestimmung des Verschleißgrades eines Zahnriemens einer Brennkraftmaschine, da der Service-Intervall zu dessen Austausch nunmehr individuell an dessen tatsächlichen Verschleiß angepaßt werden kann.

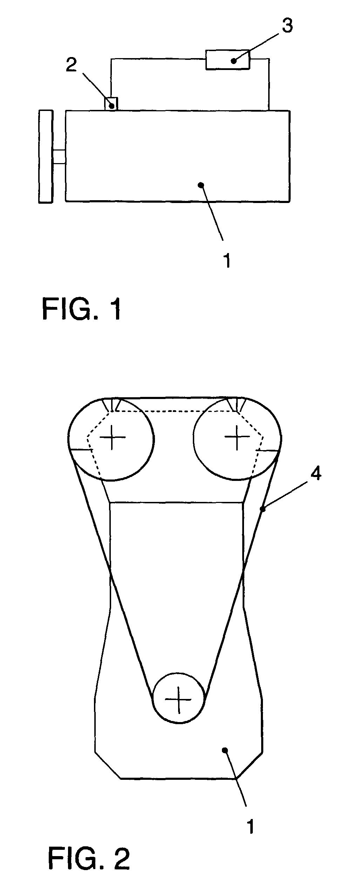

Die Erfindung wird nachfolgend anhand eines in den Figuren 1 und 2 schematisch dargestellten Ausführungsbeispiels näher erläutert, welches den Verfahrensablaufes zur Bestimmung des Service-Intervalles für einen Zahnriemenwechsel beschreibt.

An einer in den Figuren 1 und 2 in zwei Ansichten vereinfacht dargestellten Brennkraftmaschine 1 detektieren verschiedene Sensoren2 zunächst beispielsweise die Motordrehzahl, die Fahrgeschwindigkeit, die Einspritzmenge und die Umgebungstemperatur, die in einer ersten Datenverarbeitungseinrichtung 3 mit Hilfe einer Übertragungsfunktion in eine aktuelle Belastung eines Zahnriemens 4 umgerechnet werden, wobei diese Übertragungsfunktionen beispielsweise als Belastung ein Riementrummkraftkollektiv, ein Riementemperaturkollektiv, ein Riementemperaturwirkdauerkollektiv, ein Reibwegkollektiv zwischen Riemen und Zahnriemenrad oder auch die Zahl der Kurbel- oder Nockenwellenumdrehungen angeben kann.

Diese erzeugten Belastungsdaten werden in einem nachfolgenden Verfahrensschritt mit denen zuvor von in Labor- bzw. Dauerlaufversuchen ermittelten Ausfallfunktionen verglichen, beispielsweise solchen für einen Zahnriemenbiegewechsel in Abhängigkeit von Temperatur und Trummkraft oder einer Gewebeverschleißrate als Funktion des Reibweges oder auch einer Shorehärteänderung als Funktion der Zahnriementemperatur und Einwirkdauer. Hieraus läßt sich ein Schädigungsgrad eines Zahnriemens ablesen, der zusätzlich mit weiteren bekannten Grenzwerten für eine Elastomärverhärtung, die Riemenreißkraft und die Zahnriemengewebedicke in einer weiteren Prozeßfolge mit zulässigen Grenzwerten vergleichen läßt, wobei eine Überschreitung dieser Grenzwerte zu einem Fehlereintrag in dem Betriebsdatenerfassungssystem oder auch zu einem Servicehinweis an den Fahrzeugführer führt.

## Patentansprüche

1. Auswerteverfahren zur Bestimmung eines Schädigungsgrades einer Maschine oder Maschinenkomponente mit einem daran angeschlossenen Betriebsdatenerfassungssystem, dadurch gekennzeichnet, daß während eines Maschinenbetriebes über Sensoren Betriebsparameter aufgenommen werden, diese mit Hilfe von Übertragungsfunktionen in aktuelle Belastungen umgerechnet und diese Belastungen über die Lebensdauer der Maschine oder Maschinenkomponente aufsummiert werden und die Summe mit einer in empirischen Versuchen ermittelten Ausfallfunktionen verglichen und daraus ein Schädigungsgrad errechnet wird.

2. Auswerteverfahren nach Anspruch 1, dadurch gekennzeichnet, daß bei Erreichen eines festgesetzten Grenzwertes für den tolerierbaren Schädigungsgrad ein Servicehinweis aktiviert und/oder eine Fehlermeldung in das Betriebsdatenerfassungssystem abgelegt wird.

3. Auswerteverfahren nach Anspruch 1, dadurch gekennzeichnet, daß einzelne Belastungen oder Kombinationen verschiedener Belastungen in eine Schädigungsgröße umgerechnet werden.

4. Auswerteverfahren nach Anspruch 1, dadurch gekennzeichnet, daß die Maschine als Brennkraftmaschine ausgebildet ist.

5. Auswerteverfahren nach Anspruch 4, dadurch gekennzeichnet, daß der Schädigungsgrad eines Riementriebs, insbesondere eines Zahnriemens an der Brennkraftmaschine bestimmbar ist.
